# FASCICULE DE BREVET EUROPEEN

(11) **EP 3 898 282 B1**
(45) Date de publication et mention de la délivrance du brevet: **09.08.2023**
(21) Numéro de dépôt: 19848777.9
(22) Date de dépôt: 13.12.2019
(51) Int. Cl.: B60C 11/03, B60C 11/24

(54) **PNEUMATIQUE POUR MOTO**
MOTORRADREIFEN
MOTORCYCLE TYRE

(30) Priorité: 18.12.2018 FR 1873222
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: LEJEUNE, Jonathan, 63040 CLERMONT FERRAND CEDEX 9 (FR)
(74) Mandataire: Le Cam, Stéphane Georges Elie
(86) Numéro de dépôt international: PCT/FR2019/053054
(87) Numéro de publication internationale: WO 2020/128251

(56) Documents cités:
- EP-A1- 3 369 590
- FR-A1- 3 060 457
- JP-A- 2021 094 961

## Description

### DOMAINE DE L'INVENTION

L'invention concerne un pneumatique destiné à équiper un véhicule motorisé à deux roues de type moto.

### ETAT DE LA TECHNIQUE

Lorsqu'un nouveau pneumatique est installé sur un véhicule, une période de rodage est toujours nécessaire pour que ledit pneumatique soit dans ses conditions optimales d'utilisation, que ce soit en termes de couplage par rapport au véhicule mais également en termes de structure, notamment de gomme.

Un pneumatique pour véhicule motorisé à deux roues ne fait donc pas exception à ce principe de rodage, avec une contrainte complémentaire résidant dans l'utilisation spécifique du pneumatique selon l'angle de carrossage pris par le conducteur. La bande de roulement d'un pneumatique pour véhicule motorisé à deux roues va en effet être sollicitée différemment selon l'angle emprunté par le conducteur, ce qui implique un rodage pouvant différer selon l'angle de carrossage.

Pour aider l'utilisateur à connaître l'état de rodage de son pneumatique, il a pu être proposé des pneumatiques ayant un système indicateur sur la bande de roulement, par exemple une rainure longitudinale selon un méridien du pneumatique. Une telle solution n'est toutefois pas satisfaisante puisqu'elle ne donne pas une indication quel que soit le positionnement du pneumatique par rapport au véhicule, et elle peut en outre générer des formes d'usures irrégulières et anormales. Un autre exemple de système indicateur est donné dans la demande de brevet EP3369590.

Une autre préoccupation du conducteur pendant la phase de rodage concerne la sécurité, et il peut en particulier être préoccupé par l'adhérence du pneumatique qui n'est pas optimale dans cette phase initiale d'utilisation du pneumatique.

Dans la demande de brevet US 2010/282387, il a été proposé de former à la surface de la bande de roulement une rugosité micrométrique pour augmenter la surface de contact et donc l'adhérence du pneumatique lors des premières utilisations du pneumatique. Une telle solution reste toutefois peu satisfaisante puisqu'elle ne fonctionne que pour les premiers kilomètres parcourus, et donc pas nécessairement pendant toute la phase de rodage du pneumatique. En outre, le conducteur n'a toujours pas d'indication claire de l'utilisation de son pneumatique sur l'ensemble de la bande de roulement.

Au regard de ce qui précède, il existe donc un besoin d'un pneumatique pour véhicule motorisé à deux roues, de type moto, qui présente une utilisation améliorée pendant la phase de rodage dudit pneumatique, en particulier les 200 premiers kilomètres d'utilisation, présentant un système permettant à l'utilisateur de connaître l'état d'utilisation et/ou de rodage du pneumatique tout en garantissant une adhérence accrue par rapport à un pneumatique standard en phase de rodage.

### EXPOSE DE L'INVENTION

A cette fin, on propose un pneumatique tel que défini dans la revendication 1.

Des aspects préférés sont tels que définis dans les revendications dépendantes 2-15.

### DESCRIPTION DES FIGURES

- La figure 1 est une coupe méridienne d'un pneumatique pour véhicule motorisé à deux roues, ayant un système indicateur selon l'invention.
- La figure 2 est une représentation schématique selon une coupe radiale d'une cavité d'un système indicateur selon l'invention.
- La figure 3 est une représentation tridimensionnelle d'une bande de roulement d'un pneumatique selon un premier mode de réalisation de l'invention.
- La figure 4 est une représentation tridimensionnelle d'une bande de roulement d'un pneumatique selon un deuxième mode de réalisation de l'invention.
- La figure 5 est une vue agrandie du système indicateur du pneumatique selon le deuxième mode de réalisation de l'invention.
- La figure 6 est une vue selon une coupe radiale de la bande de roulement du pneumatique selon le deuxième mode de réalisation de l'invention, illustrant la répartition angulaire du système indicateur correspondant.
- La figure 7 est une vue agrandie du système indicateur d'un pneumatique selon un troisième mode de réalisation de l'invention.
- La figure 8 est une vue selon une coupe radiale de la bande de roulement du pneumatique selon le troisième mode de réalisation de l'invention, illustrant la répartition angulaire du système indicateur correspondant.

### DESCRIPTION DETAILLEE DE L'INVENTION

Dans ce document, on entend par « surface de roulement » l'ensemble des points de la bande de roulement d'un pneumatique qui sont susceptibles d'entrer en contact avec le sol lorsque le pneumatique roule.

Dans l'emploi du terme « radial » il convient de distinguer plusieurs utilisations différentes du mot par la personne du métier.

Premièrement, l'expression se réfère à un rayon du pneumatique. Une « direction radiale » est une direction coupant l'axe de rotation du pneumatique et perpendiculaire à celui-ci. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Par ailleurs, on qualifie de rayon Rx d'un point X du pneumatique la distance radiale entre l'axe de rotation dudit pneumatique et le point X.

En revanche, un fil ou une armature est dit « radial » lorsque le fil ou les éléments de renforcement de l'armature font avec la direction circonférentielle un angle supérieur ou égal à 80° et inférieur ou égal à 90°. Précisons que dans le présent document, le terme « fil » doit être entendu dans un sens tout à fait général et comprend les fils se présentant sous la forme de monofilament, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique. Un « plan radial ou méridien » est un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8.

Le « plan médian ou plan équatorial » du pneumatique est le plan qui est perpendiculaire à l'axe de rotation du pneumatique et qui se situe à équidistance des structures annulaires de renforcement de chaque bourrelet. Ce plan divise le pneumatique en deux moitiés sensiblement égales, c'est-à-dire qui passe par le milieu de la bande de roulement.

Une « direction circonférentielle » est une direction qui est perpendiculaire à la fois à un rayon du pneumatique et à la direction axiale. Cela correspond à la direction de roulement du pneumatique.

Une « coupe circonférentielle » ou « section circonférentielle » est respectivement une coupe ou une section selon un plan perpendiculaire à l'axe de rotation du pneumatique. Un « plan circonférentiel » est un plan perpendiculaire à l'axe de rotation du pneumatique.

L'angle de carrossage au sol se définit sur une coupe méridienne du pneumatique comme l'angle formé par le plan équatorial du pneumatique avec la direction perpendiculaire au sol passant par le point de contact entre le pneumatique et le sol. Un angle de carrossage nul correspond à une position où le pneumatique est perpendiculaire par rapport au sol, c'est-à-dire que la perpendiculaire au sol est dans le plan équatorial du pneumatique. Par extension, l'angle de carrossage sur le pneumatique se définit sur une coupe méridienne du pneumatique comme l'angle formé entre le plan équatorial du pneumatique et la direction perpendiculaire à la direction tangente à la surface du pneumatique passant par le point de roulement du pneumatique destiné à être en contact avec le sol pour un carrossage donné, c'est-à-dire le point passant par la ligne de roulement du pneumatique pour un carrossage donné.

Pour faciliter la lecture de la description des variantes montrées avec les figures, les mêmes références sont employées pour désigner des éléments de structure identiques.

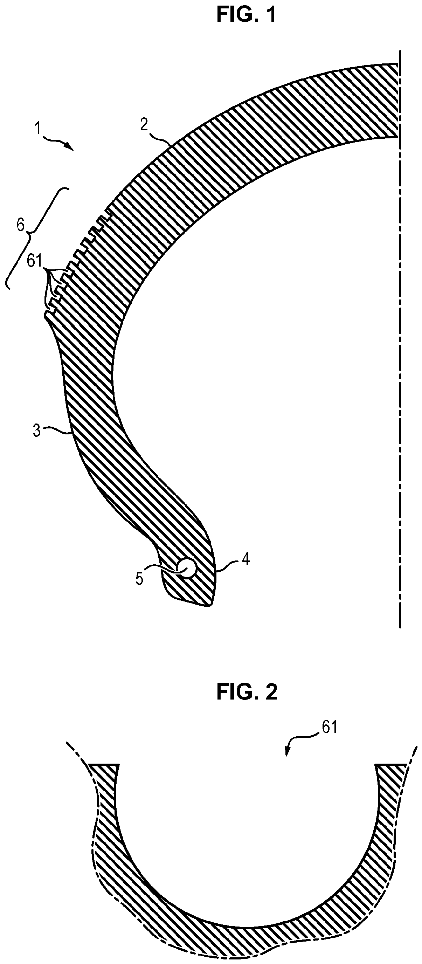

La figure 1 est une coupe d'un pneumatique 1 pour véhicule motorisé à deux roues, de type moto, comprenant une bande de roulement 2 reliée par deux flancs 3 à deux bourrelets 4.

Chaque bourrelet 4 comprenant une tringle 5 de renforcement circonférentielle, les bourrelets 4 étant destinés à entrer en contact avec une jante sur laquelle le pneumatique 1 est destiné à être monté.

Il est à noter que le pneumatique 1 comprend en outre généralement une structure de carcasse (non représentée), cette structure de carcasse comprenant une ou plusieurs nappes de carcasse agencées spécifiquement.

Le pneumatique 1 comprend en outre selon l'invention un système indicateur 6 qui est constitué d'une pluralité de cavités 61 formées à la surface de la bande de roulement 1. Comme on le verra plus loin, ce système indicateur (6) pourra être utilisé pour donner une information sur le carrossage du pneumatique et/ou sur le rodage du pneumatique.

Les cavités 61 sont de préférence agencés de manière à être réparties sur la totalité de la circonférence du pneumatique, et une certaine largeur de bande de roulement.

Plus spécifiquement, les cavités 61 sont agencées selon plusieurs ensembles circonférentiels de cavités (6a ; 6b ; 6c) représentant différents angles de carrossage du pneumatique 1.

Un ensemble circonférentiel de cavités (6a ; 6b ; 6c) comprend une pluralité de cavités 61 agencées selon un arc de cercle, de préférence selon un cercle correspondant à une direction circonférentielle du pneumatique, et où deux cavités adjacentes sont espacées d'un pas circonférentiel (Pc) selon l'arc de cercle, ce pas circonférentiel (Pc) étant non nul.

Le pas circonférentiel (Pc) est par exemple compris entre 1 mm et 10 mm, de préférence entre 1 mm et 8 mm, de préférence encore entre 4 mm et 6 mm. Le pas circonférentiel (Pc) est par exemple de l'ordre de 5 mm.

En outre, selon le système indicateur 6 proposé, les différents ensembles circonférentiels de cavités (6a ; 6b ; 6c) sont agencés selon un motif radial spécifique, le motif radial étant défini par un pas radial (Pr) correspondant à l'espacement selon la direction radiale entre les arcs de cercle de deux ensembles circonférentiels de cavités adjacents, le pas radial (Pr) étant par exemple compris entre 1 mm et 10 mm.

De préférence encore, le pas radial (Pr) est compris entre 1 mm et 5 mm, et préférentiellement entre 2 mm et 3 mm. Le pas radial (Pr) est par exemple de l'ordre de 2,5 mm.

Le fait d'avoir des ensembles circonférentiels de cavités (6a ; 6b ; 6c) agencés selon un motif radial spécifique permet de donner une information précieuse au conducteur sur l'utilisation de la bande de roulement du pneumatique utilisé. En particulier, l'usure des cavités 61 lui permet de savoir si une ligne de roulement particulière, selon un angle de carrossage de pneumatique particulier, est suffisamment rodée ou pas. Cela donne aussi naturellement une information sur l'utilisation du pneumatique à un angle de carrossage particulier.

Le motif radial peut par exemple être prévu pour que deux ensembles circonférentiels de cavités (6a ; 6b ; 6c) adjacents soient séparés radialement d'un secteur angulaire de carrossage de 1°. Ainsi, cela permet de marquer précisément les angles de carrossage sur le pneumatique et de donner au conducteur une information facile à intégrer.

Le fait que les cavités 61 soient réparties circonférentiellement permet au conducteur d'obtenir une information sur l'angle de carrossage, et donc sur l'utilisation du pneumatique selon la ligne de roulement correspondante, quel que soit le positionnement du pneumatique par rapport au véhicule.

Le fait de prévoir de réelles cavités 61 pour former le système indicateur 6 proposé présente l'avantage d'augmenter l'adhérence du pneumatique, notamment lorsque les cavités 61 sont positionnées selon la direction de roulement. En effet, les cavités 61 permettent d'augmenter le taux d'arête, ce qui vient de fait augmenter l'adhérence du pneumatique.

Chaque cavité 61 a donc des dimensions minimum, par exemple une largeur moyenne et une profondeur d'au moins 0,1 mm, respectivement. De préférence la largeur moyenne et la profondeur sont d'au moins 0,2 mm, respectivement.

Chaque cavité 61 a de préférence une largeur moyenne maximale inférieure à 3 mm et préférentiellement encore inférieure à 1 mm.

Chaque cavité 61 a par ailleurs de préférence une profondeur maximale inférieure à 1 mm.

De façon encore préférée, chaque cavité 61 a une largeur moyenne et/ou une profondeur maximale comprise entre 0,1 mm et 1 mm, et de préférence entre 0,2 mm et 0,5 mm.

Les cavités 61 des différents ensembles circonférentiels de cavités (6a ; 6b ; 6c) peuvent avoir une forme identique et des dimensions identiques.

Toutefois, selon un autre mode de réalisation possible, les cavités 61 de deux ensembles circonférentiels de cavités (6a ; 6b ; 6c) adjacents ont des profondeurs différentes.

La profondeur et/ou la largeur moyenne des cavités 61 des ensembles circonférentiels de cavités (6a ; 6b ; 6c) peut par exemple augmenter avec le positionnement d'angle de carrossage de pneumatique correspondant. Un tel agencement est particulièrement avantageux puisque cela permet de faire varier le taux d'arête, et donc l'adhérence, en fonction de l'angle de carrossage. En particulier, il pourra être opportun d'avoir un taux d'arête plus important selon que l'angle de carrossage est élevé, puisque c'est en particulier dans ces situations d'angle de carrossage important que le conducteur a besoin d'être rassuré sur l'adhérence de son pneumatique pendant la phase de rodage.

Selon un exemple spécifique, la profondeur et/ou la largeur moyenne des cavités 61 des ensembles circonférentiels de cavités (6a ; 6b ; 6c) augmentent avec le positionnement d'angle de carrossage de pneumatique correspondant, d'une valeur de 0,2 mm à une valeur de 1 mm, et de préférence d'une valeur de 0,2 mm à une valeur de 0,5 mm.

Chaque cavité 61 est un trou borgne ayant une section de forme choisie parmi par exemple une section circulaire, une section polygonale, une section en étoile, et une section ovale. Cette section peut varier ou être constante selon la profondeur de la cavité 61.

L'exemple de cavité 61 illustré à la figure 2 correspond à une cavité 61 de forme partiellement sphérique, proche d'une demi-sphère.

Le motif radial des ensembles circonférentiels de cavités (6a ; 6b ; 6c) formant le système indicateur 6 peut être varié.

Les ensembles circonférentiels de cavités (6a ; 6b ; 6c) du système indicateur (6) peuvent être répartis sur la bande de roulement 2 du pneumatique 1 de part et d'autre du plan équatorial du pneumatique 1 dans une zone angulaire de carrossage selon un secteur angulaire de carrossage d'au moins 10°, de préférence selon un secteur angulaire de carrossage d'au moins 15°, et de préférence encore selon un secteur angulaire de carrossage d'au moins 20°.

Les différents ensembles circonférentiels de cavités (6a ; 6b ; 6c) du système indicateur (6) peuvent être répartis sur la bande de roulement 2 de part et d'autre du plan équatorial du pneumatique 1 dans une zone angulaire de carrossage comprise entre un angle de carrossage sur le pneumatique de 0° et un angle de carrossage sur le pneumatique d'au moins 40°.

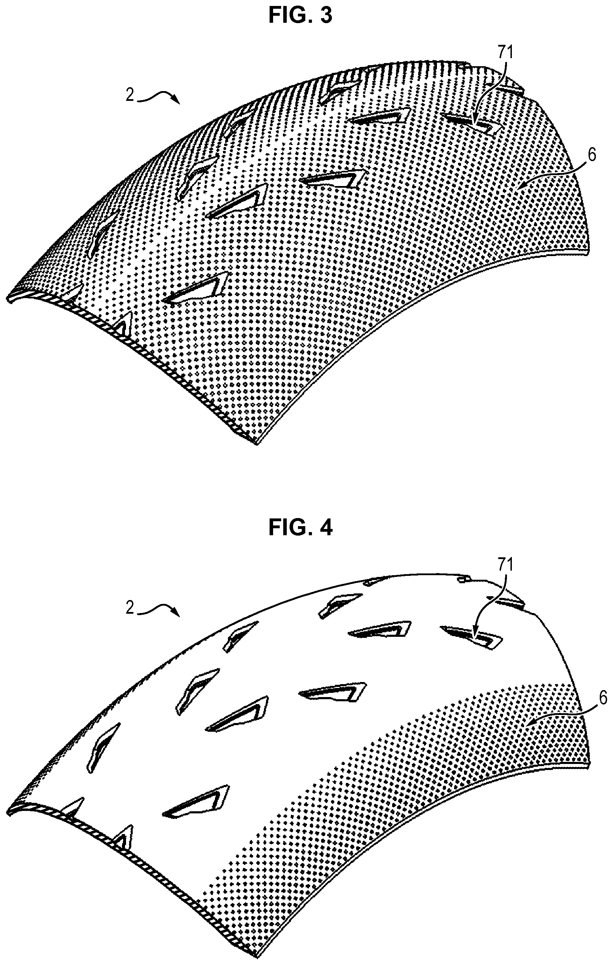

Comme représenté à la figure 3, les ensembles circonférentiels de cavités (6a ; 6b ; 6c) peuvent sont de préférence répartis sur la totalité de la bande de roulement 2 du pneumatique 1. Cela permet d'avoir une indication précise du carrossage pris par le pneumatique sur l'ensemble de la bande de roulement.

Le rodage d'un pneumatique est toutefois relativement rapide et peu risqué en termes d'adhérence s'agissant de la zone centrale de la bande de roulement positionnée de part et d'autre du plan équatorial du pneumatique. Ceci est moins vrai pour les zone de la bande de roulement de la zone épaule, c'est-à-dire proche de la jonction avec le flanc du pneumatique. En effet, ces zones correspondent à ces angles de carrossage élevés et donc des zones du pneumatique bien moins sollicitées. En outre, elles correspondent à des zones où le risque de perte d'adhérence est augmenté et où le pneumatique doit absolument jouer son rôle pour assurer le grip requis.

Ainsi, il peut être prévu de répartir les ensembles circonférentiels de cavités (6a ; 6b ; 6c) sur la bande de roulement 2 du pneumatique 1 dans les zones épaule uniquement, par exemple une zone angulaire de carrossage comprise entre un angle de carrossage sur le pneumatique de 30° et un angle de carrossage sur le pneumatique de 60°.

De préférence les ensembles circonférentiels de cavités (6a ; 6b ; 6c) sont répartis sur une zone angulaire de carrossage comprise entre un angle de carrossage sur le pneumatique de 40° et un angle de carrossage sur le pneumatique de 58°, et de préférence encore comprise entre un angle de carrossage sur le pneumatique de 48° et un angle de carrossage sur le pneumatique de 58°.

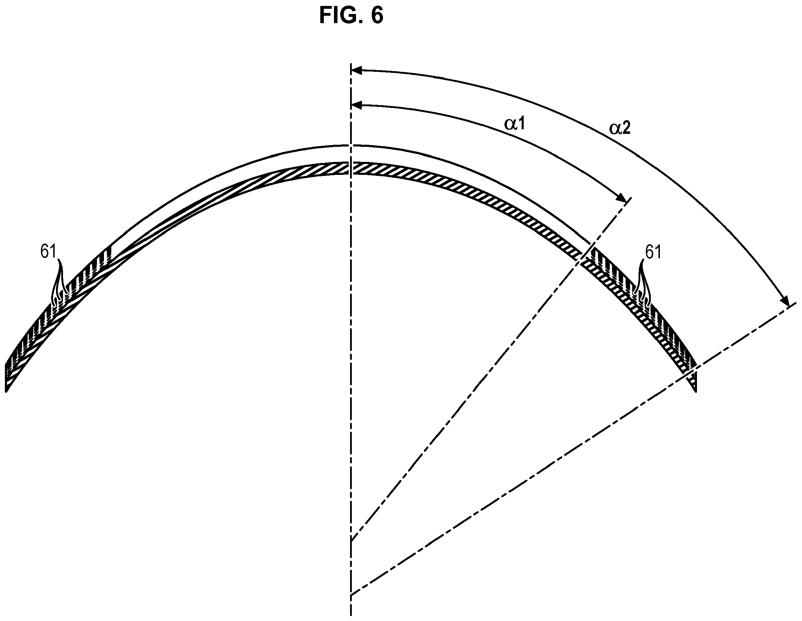

Les figures 4 à 6 illustrent un tel agencement en zone épaule selon un premier exemple de réalisation spécifique où les cavités 61 sont réparties entre un angle de carrossage sur le pneumatique (α1) d'environ 40° et un angle de carrossage sur le pneumatique (α2) d'environ 58°.

Le système indicateur 6 selon ce premier exemple de réalisation comprend 17 ensembles circonférentiels de cavités, où deux ensembles circonférentiels de cavités adjacents sont espacés d'un angle de carrossage d'environ 1°. Le pas radial (Pr) correspondant est de l'ordre de 2,5 mm.

Selon ce premier exemple de réalisation, les cavités 61 ont une forme correspondant à une portion de sphère, avec une largeur maximale d'environ 1,5 mm au niveau de la surface de la bande de roulement (soit un rayon de 0,75 mm) et une profondeur variable entre les deux positionnements extrêmes de la zone épaule comprise entre 0,2 mm du côté du centre du pneumatique et 0,5 mm du côté du flanc. Le pas circonférentiel (Pc) entre deux cavités 61 d'un même ensemble circonférentiels de cavités est selon cet exemple de l'ordre de 5 mm.

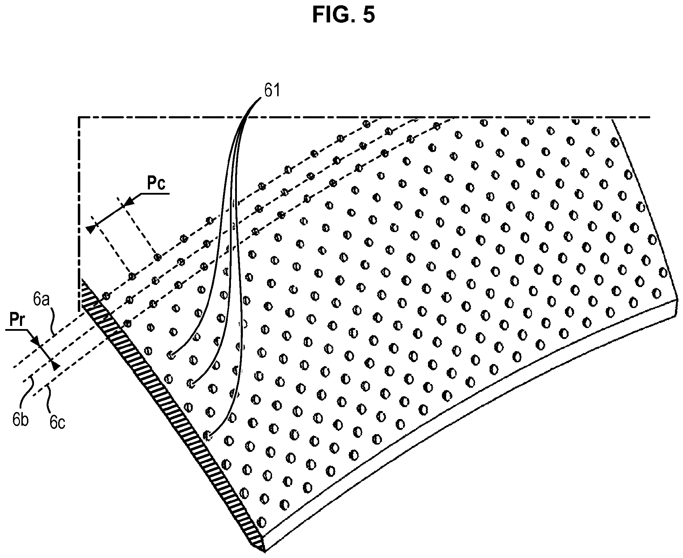

Comme il est apparent à la figure 5, les cavités 61 adjacentes de deux ensembles circonférentiels de cavités (6a ; 6b ; 6c) adjacents sont en décalage, non-alignées selon une même direction radicale.

Il pourrait toutefois être prévu que le système indicateur 6 soit formé de sorte que les cavités 61 adjacentes de deux ensembles circonférentiels de cavités (6a ; 6b ; 6c) adjacents sont alignées selon une même direction radicale.

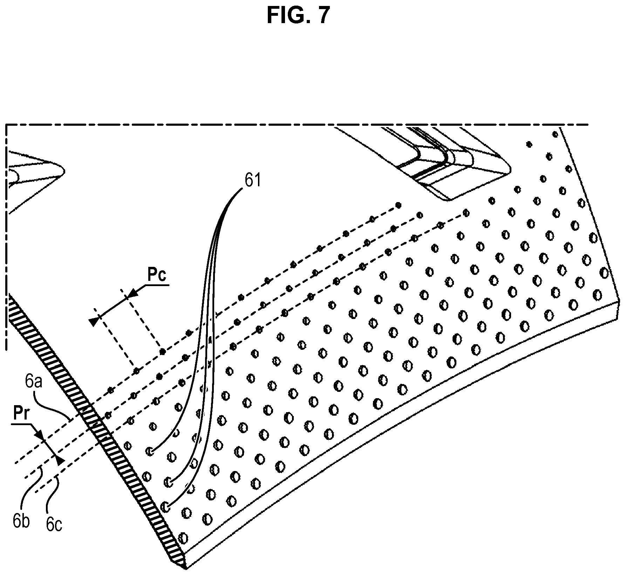

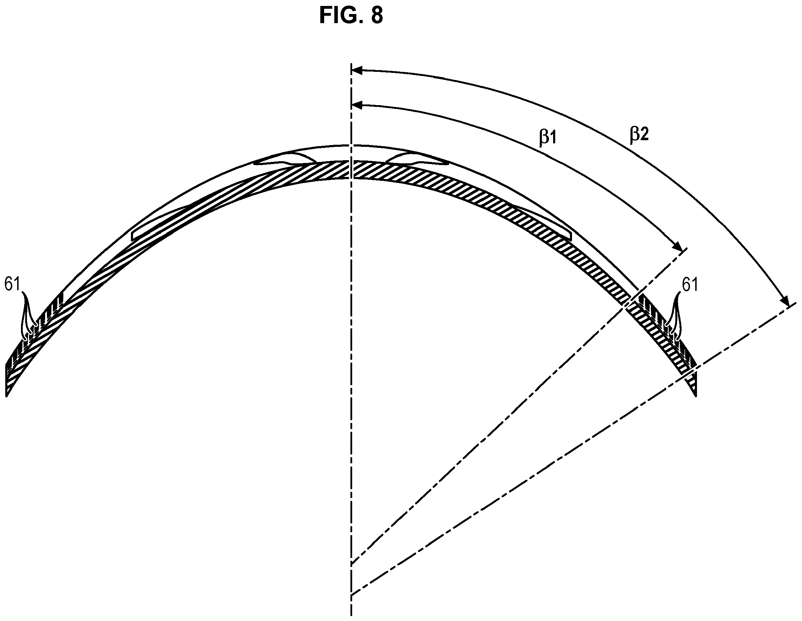

Les figures 7 et 8 illustrent un agencement en zone épaule selon un deuxième exemple de réalisation spécifique où les cavités 61 sont réparties entre un angle de carrossage sur le pneumatique (β1) d'environ 48° et un angle de carrossage sur le pneumatique (β2) d'environ 58°.

Le système indicateur 6 selon ce deuxième exemple de réalisation comprend 10 ensembles circonférentiels de cavités, où deux ensembles circonférentiels de cavités adjacents sont espacés d'un angle de carrossage d'environ 1°. Le pas radial (Pr) correspondant est de l'ordre de 1,2 mm.

Selon ce deuxième exemple de réalisation, les cavités 61 ont également une forme sensiblement de demi-sphère, avec une largeur d'environ 1,5 mm (soit une section circulaire à la surface de la bande de roulement ayant un rayon de 0,75 mm) et une profondeur variable entre les deux extrémités de la zone épaule de positionnement, comprise entre 0,2 mm et 0,5 mm du côté du flanc. Le pas circonférentiel (Pc) entre deux cavités 61 d'un même ensemble circonférentiels de cavités est selon cet exemple également de l'ordre de 2,5 mm.

Le pneumatique présenté ici peut avantageusement avoir une bande de roulement 2 comprenant en outre une pluralité d'entailles sensiblement longitudinales 71 positionnées de part et d'autre du plan équatorial du pneumatique 1. Ces entailles peuvent avoir un rôle d'évacuation de l'eau pendant toute la durée de l'usage du pneumatique et donc bien au-delà de la phase de rodage.

Un tel agencement d'entailles longitudinales 71 venant en complément du système indicateur proposé est particulièrement avantageux lorsque les cavités 61 du système indicateur 6 sont uniquement positionnées sur les zones épaule du pneumatique puisque ces entailles 71 viennent améliorer l'adhérence du pneumatique en phase de rodage au niveau de la zone équatoriale.

### REFERENCES BIBLIOGRAPHIQUES

- US 2010/282387

## Revendications

1. Pneumatique (1) destiné à équiper un véhicule motorisé à deux roues, de type moto, le pneumatique comprenant une bande de roulement (2) reliée par deux flancs (3) à deux bourrelets (4), chaque bourrelet (4) comprenant une tringle (5) de renforcement circonférentielle, lesdits bourrelets (4) étant destinés à entrer en contact avec une jante sur laquelle le pneumatique (1) est destiné à être monté,
le pneumatique comprenant un système indicateur (6) comprenant une pluralité de cavités (61) formées à la surface de la bande de roulement (1), chaque cavité (61) ayant une profondeur maximale inférieure à 1 mm et une largeur moyenne inférieure à 3 mm, les cavités (61) étant agencées selon plusieurs ensembles circonférentiels de cavités (6a' ; 6b' ; 6c') représentant différents angles de carrossage du pneumatique (1),
chaque ensemble circonférentiel de cavités (6a ; 6b ; 6c) comprenant une pluralité de cavités (61) agencées selon un arc de cercle et où deux cavités adjacentes sont espacées d'un pas circonférentiel (Pc) selon l'arc de cercle compris entre 1 mm et 10 mm,
les différents ensembles circonférentiels de cavités (6a ; 6b ; 6c) étant agencés selon un motif radial spécifique, le motif radial étant défini par un pas radial (Pr) sur la surface de la bande de roulement (1) correspondant à l'espacement entre les arcs de cercle de deux ensembles circonférentiels de cavités adjacents, le pas radial (Pr) étant compris entre 1 mm et 10 mm,
**caractérisé en ce que** les cavités (61) des ensembles circonférentiels de cavités (6a ; 6b ; 6c) ont des profondeurs et/ou des largeurs moyennes qui augmentent avec le positionnement d'angle de carrossage de pneumatique correspondant.

2. Pneumatique selon la revendication 1, dans lequel les différents ensembles circonférentiels de cavités (6a ; 6b ; 6c) du système indicateur (6) sont répartis sur la bande de roulement (2) de part et d'autre du plan équatorial du pneumatique (1) dans une zone angulaire de carrossage comprise entre un angle de carrossage sur le pneumatique de 0° et un angle de carrossage sur le pneumatique d'au moins 40°.

3. Pneumatique selon la revendication 1, dans lequel les ensembles circonférentiels de cavités (6a ; 6b ; 6c) du système indicateur (6) sont répartis sur la bande de roulement (2) du pneumatique (1) de part et d'autre du plan équatorial du pneumatique (1) dans une zone angulaire de carrossage selon un secteur angulaire de carrossage d'au moins 10°, de préférence selon un secteur angulaire de carrossage d'au moins 15°, et de préférence encore selon un secteur angulaire de carrossage d'au moins 20°.

4. Pneumatique selon l'une quelconque des revendications 1 à 3, dans lequel les ensembles circonférentiels de cavités (6a ; 6b ; 6c) du système indicateur (6) sont répartis sur la totalité de la bande de roulement (2) du pneumatique (1).

5. Pneumatique selon la revendication 1, dans lequel les ensembles circonférentiels de cavités (6a ; 6b ; 6c) du système indicateur (6) sont répartis sur la bande de roulement (2) du pneumatique (1) de part et d'autre du plan équatorial du pneumatique (1) dans une zone angulaire de carrossage comprise entre un angle de carrossage sur le pneumatique de 30° et un angle de carrossage sur le pneumatique de 60°, de préférence comprise entre un angle de carrossage sur le pneumatique de 40° et un angle de carrossage sur le pneumatique de 58°, et de préférence encore comprise entre un angle de carrossage sur le pneumatique de 48° et un angle de carrossage sur le pneumatique de 58°.

6. Pneumatique selon l'une quelconque des revendications 1 à 5, dans lequel deux ensembles circonférentiels de cavités (6a ; 6b ; 6c) adjacents sont séparés radialement d'un secteur angulaire de carrossage de 1°.

7. Pneumatique selon l'une quelconque des revendications 1 à 6, dans lequel les cavités de deux ensembles circonférentiels de cavités (6a ; 6b ; 6c) adjacents ont des profondeurs et/ou des largeurs moyennes différentes, avec des valeurs comprises entre 0,1 mm et 1 mm, et de préférence entre 0,2 mm et 0,5 mm.

8. Pneumatique selon l'une quelconque des revendications 1 à 7, dans lequel les cavités (61) des ensembles circonférentiels de cavités (6a ; 6b ; 6c) ont des profondeurs et/ou des largeurs moyennes qui augmentent avec le positionnement d'angle de carrossage de pneumatique correspondant, d'une valeur de 0,2 mm à une valeur de 1 mm.

9. Pneumatique selon l'une quelconque des revendications 1 à 8, dans lequel les cavités (61) du système indicateur (6) sont agencées de sorte que les cavités (61) adjacentes de deux ensembles circonférentiels de cavités (6a ; 6b ; 6c) adjacents sont alignées selon une même direction radicale.

10. Pneumatique selon l'une quelconque des revendications 1 à 8, dans lequel les cavités (61) du système indicateur (6) sont agencées de sorte que les cavités (61) adjacentes de deux ensembles circonférentiels de cavités (6a ; 6b ; 6c) adjacents sont en décalage, non-alignées selon une même direction radicale.

11. Pneumatique selon l'une quelconque des revendications 1 à 10, dans lequel chaque cavité (61) est un trou borgne ayant une section de forme choisie parmi une section circulaire, une section polygonale, une section en étoile, et une section ovale.

12. Pneumatique selon la revendication 11, dans lequel la section d'une cavité (61) varie dans la profondeur de la cavité (61).

13. Pneumatique selon l'une quelconque des revendications 1 à 8, dans lequel les cavités (61) ont une forme partiellement sphérique, de préférence une forme de demi-sphère.

14. Pneumatique selon l'une quelconque des revendications 1 à 13, dans lequel les cavités (61) de deux ensembles circonférentiels de cavités (6a ; 6b ; 6c) adjacents ont des formes et/ou des dimensions différentes.

15. Pneumatique selon l'une quelconque des revendications 1 à 14, dans lequel la bande de roulement (2) comprend en outre une pluralité d'entailles sensiblement longitudinales (71) positionnées de part et d'autre du plan équatorial du pneumatique (1).

## Patentansprüche

1. Reifen (1), der dazu bestimmt ist, ein motorisiertes Zweiradfahrzeug vom Typ Motorrad auszustatten, wobei der Reifen einen Laufstreifen (2) umfasst, der durch zwei Flanken (3) mit zwei Wülsten (4) verbunden ist, wobei jede Wulst (4) einen Kern (5) zur Umfangsverstärkung umfasst, wobei die Wülste (4) dazu bestimmt sind, mit einer Felge, auf der der Reifen (1) montiert werden soll, in Kontakt zu treten,
wobei der Reifen ein Indikatorsystem (6) umfasst, das mehrere Hohlräume (61) umfasst, die auf der Oberfläche des Laufstreifens (1) ausgebildet sind, wobei jeder Hohlraum (61) eine maximale Tiefe von weniger als 1 mm und eine mittlere Breite von weniger als 3 mm aufweist, wobei die Hohlräume (61) in mehreren Hohlraumumfangsanordnungen (6a'; 6b'; 6c') angeordnet sind, die verschiedene Sturzwinkel des Reifens (1) repräsentieren,
wobei jede Hohlraumumfangsanordnung (6a; 6b; 6c) mehrere Hohlräume (61) umfasst, die in einem Kreisbogen angeordnet sind, und wobei zwei benachbarte Hohlräume um eine Umfangsteilung (Pc) entlang des Kreisbogens zwischen 1 mm und 10 mm voneinander beabstandet sind, wobei die verschiedenen Hohlraumumfangsanordnungen (6a; 6b; 6c) in einem spezifischen radialen Muster angeordnet sind, wobei das radiale Muster durch eine radiale Teilung (Pr) auf der Oberfläche des Laufstreifens (1) definiert ist, die dem Abstand zwischen den Kreisbögen zweier benachbarter Hohlraumumfangsanordnungen entspricht, wobei die radiale Teilung (Pr) zwischen 1 mm und 10 mm beträgt,
**dadurch gekennzeichnet, dass** die Hohlräume (61) der Hohlraumumfangsanordnungen (6a; 6b; 6c) mittlere Tiefen und/oder Breiten aufweisen, die mit der entsprechenden Reifensturzwinkelpositionierung zunehmen.

2. Reifen nach Anspruch 1, wobei die verschiedenen Hohlraumumfangsanordnungen (6a; 6b; 6c) des Indikatorsystems (6) über den Laufstreifen (2) zu beiden Seiten der Äquatorialebene des Reifens (1) in einem Sturzwinkelbereich zwischen einem Reifensturzwinkel von 0° und einem Reifensturzwinkel von mindestens 40° verteilt sind.

3. Reifen nach Anspruch 1, wobei die Hohlraumumfangsanordnungen (6a; 6b; 6c) des Indikatorsystems (6) über den Laufstreifen (2) des Reifens (1) zu beiden Seiten der Äquatorialebene des Reifens (1) in einem Sturzwinkelbereich in einem Sturzwinkelsektor von mindestens 10°, vorzugsweise in einem Sturzwinkelsektor von mindestens 15° und besonders vorzugsweise in einem Sturzwinkelsektor von mindestens 20°, verteilt sind.

4. Reifen nach einem der Ansprüche 1 bis 3, wobei die Hohlraumumfangsanordnungen (6a; 6b; 6c) des Indikatorsystems (6) über den gesamten Laufstreifen (2) des Reifens (1) verteilt sind.

5. Reifen nach Anspruch 1, wobei die Hohlraumumfangsanordnungen (6a; 6b; 6c) des Indikatorsystems (6) über den Laufstreifen (2) des Reifens (1) zu beiden Seiten der Äquatorialebene des Reifens (1) in einem Sturzwinkelbereich zwischen einem Reifensturzwinkel von 30° und einem Reifensturzwinkel von 60°, vorzugsweise zwischen einem Reifensturzwinkel von 40° und einem Reifensturzwinkel von 58° und besonders vorzugsweise zwischen einem Reifensturzwinkel von 48° und einem Reifensturzwinkel von 58°, verteilt sind.

6. Reifen nach einem der Ansprüche 1 bis 5, wobei zwei benachbarte Hohlraumumfangsanordnungen (6a; 6b; 6c) radial durch einen Sturzwinkelsektor von 1° getrennt sind.

7. Reifen nach einem der Ansprüche 1 bis 6, wobei die Hohlräume zweier benachbarter Hohlraumumfangsanordnungen (6a; 6b; 6c) unterschiedliche mittlere Tiefen und/oder Breiten mit Werten zwischen 0,1 mm und 1 mm, vorzugsweise zwischen 0,2 mm und 0,5 mm, aufweisen.

8. Reifen nach einem der Ansprüche 1 bis 7, wobei die Hohlräume (61) der Hohlraumumfangsanordnungen (6a; 6b; 6c) mittlere Tiefen und/oder Breiten aufweisen, die mit der entsprechenden Reifensturzwinkelpositionierung von einem Wert von 0,2 mm bis auf einen Wert von 1 mm steigen.

9. Reifen nach einem der Ansprüche 1 bis 8, wobei die Hohlräume (61) des Indikatorsystems (6) so angeordnet sind, dass die benachbarten Hohlräume (61) zweier benachbarter Hohlraumumfangsanordnungen (6a; 6b; 6c) in derselben radikalen Richtung ausgerichtet sind.

10. Reifen nach einem der Ansprüche 1 bis 8, wobei die Hohlräume (61) des Indikatorsystems (6) so angeordnet sind, dass die benachbarten Hohlräume (61) zweier benachbarter Hohlraumumfangsanordnungen (6a; 6b; 6c) versetzt und in derselben radikalen Richtung nicht ausgerichtet sind.

11. Reifen nach einem der Ansprüche 1 bis 10, wobei jeder Hohlraum (61) ein Sackloch mit einem Querschnitt ist, der aus einem kreisförmigen Querschnitt, einem polygonalen Querschnitt, einem sternförmigen Querschnitt und einem ovalen Querschnitt ausgewählt ist.

12. Reifen nach Anspruch 11, wobei der Querschnitt eines Hohlraums (61) in der Tiefe des Hohlraums (61) variiert.

13. Reifen nach einem der Ansprüche 1 bis 8, wobei die Hohlräume (61) teilweise eine Kugelform, vorzugsweise eine Halbkugelform, aufweisen.

14. Reifen nach einem der Ansprüche 1 bis 13, wobei die Hohlräume (61) zweier benachbarter Hohlraumumfangsanordnungen (6a; 6b; 6c) unterschiedliche Formen und/oder Abmessungen aufweisen.

15. Reifen nach einem der Ansprüche 1 bis 14, wobei der Laufstreifen (2) ferner mehrere im Wesentlichen längs verlaufende Einschnitte (71) aufweist, die zu beiden Seiten der Äquatorialebene des Reifens (1) positioniert sind.

## Claims

1. Tire (1) for a two-wheeled motorized vehicle, of the motorcycle type, comprising a tread (2) that is connected by two sidewalls (3) to two beads (4), each bead (4) comprising a circumferential reinforcing bead wire (5), said beads (4) being intended 5 to come into contact with a rim on which the tire (1) is intended to be mounted, the tire comprising an indicator system (6) that comprises a plurality of cavities (61) formed on the surface of the tread (1), each cavity (61) having a maximum depth of less than 1 mm and an average width of less than 3 mm, the cavities (61) being arranged in a plurality of circumferential sets of cavities (6a'; 6b'; 6c') that represent different camber angles of the tire (1), each circumferential set of cavities (6a; 6b; 6c) comprising a plurality of cavities (61) that are arranged in a circular arc, wherein two adjacent cavities are spaced apart along the circular arc by a circumferential pitch (Pc) of between 1 mm and 10 mm, the various circumferential sets of cavities (6a; 6b; 6c) being arranged in a specific radial pattern, the radial pattern being defined by a radial pitch (Pr) that corresponds to the spacing in the radial direction between the circular arcs of two adjacent circumferential sets of cavities, the radial pitch (Pr) being between 1 mm and 10 mm, **characterized in that** the cavities (61) of the circumferential sets of cavities (6a; 6b; 6c) have depths and/or average widths that increase with the corresponding positioning of the tire camber angle.

2. Tire according to Claim 1, **wherein** the various circumferential sets of cavities (6a; 6b; 20 6c) of the indicator system (6) are distributed over the tread (2) on either side of the equatorial plane of the tire (1) in an angular camber region between a camber angle on the tire of 0° and a camber angle on the tire of at least 40°.

3. Tire according to Claim 1, **wherein** the circumferential sets of cavities (6a; 6b; 6c) of the indicator system (6) are distributed over the tread (2) of the tire (1) on either side of the equatorial plane of the tire (1) in an angular camber region over an angular camber sector of at least 10°, preferably over an angular camber sector of at least 15°, and more preferably over an angular camber sector of at least 20°.

4. Tire according to any one of Claims 1 to 3, **wherein** the circumferential sets of cavities(6a; 6b; 6c) of the indicator system (6) are distributed over the entire tread (2) of the tire(1).

5. Tire according to Claim 1, **wherein** the circumferential sets of cavities (6a; 6b; 6c) of the indicator system (6) are distributed over the tread (2) of the tire (1) on either side of theequatorial plane of the tire (1) in an angular camber region between a camber angle on the tire of 30° and a camber angle on the tire of 60°, preferably between a camber angle on the tire of 40° and a camber angle on the tire of 58°, and more preferably between a camber angle on the tire of 48° and a camber angle on the tire of 58°.

6. Tire according to any one of Claims 1 to 5, **wherein** two adjacent circumferential sets of cavities (6a; 6b; 6c) are separated radially by an angular camber sector of 1°.

7. Tire according to any one of Claims 1 to 6, **wherein** the cavities of two adjacent circumferential sets of cavities (6a; 6b; 6c) have different depths and/or average widths, with values of between 0.1 mm and 1 mm, and preferably between 5 0.2 mm and 0.5 mm.

8. Tire according to any one of Claims 1 to 7, **wherein** the cavities (61) of the circumferential sets of cavities (6a; 6b; 6c) have depths and/or average widths that increase with the corresponding positioning of the tire camber angle, from a value of 0.2 mm to a value of 1 mm.

9. Tire according to any one of Claims 1 to 8, **wherein** the cavities (61) of the indicator system (6) are arranged such that the adjacent cavities (61) of two adjacent circumferential sets of cavities (6a; 6b; 6c) are aligned in one and the same radial direction.

10. Tire according to any one of Claims 1 to 9, **wherein** the cavities (61) of the indicator system (6) are arranged such that the adjacent cavities (61) of two adjacent circumferential sets of cavities (6a; 6b; 6c) are offset, not aligned in one and the same radial direction.

11. Tire according to any one of Claims 1 to 10, **wherein** each cavity (61) is a blind hole having a section with a shape chosen from among a circular section, a polygonal section, a star-shaped section, and an oval section.

12. Tire according to Claim 11, **wherein** the section of a cavity (61) varies in the depth of the cavity (61).

13. Tire according to any one of Claims 1 to 8, **wherein** the cavities (61) have a partially spherical shape, preferably a hemispherical shape.

14. Tire according to any one of Claims 1 to 13, **wherein** the cavities (61) of two adjacent circumferential sets of cavities (6a; 6b; 6c) have different shapes and/or dimensions.

15. Tire according to any one of Claims 1 to 14, **wherein** the tread (2) further comprises a plurality of substantially longitudinal notches (71) positioned on either side of the equatorial plane of the tire (1).
